Europäisches Patentamt

European Patent Office

Office européen des brevets

(19)

(11) Veröffentlichungsnummer : **0 027 100 B1**

# (12) EUROPÄISCHE PATENTSCHRIFT

(45) Veröffentlichungstag der Patentschrift : 13.03.85

(21) Anmeldenummer : 80810305.5

(22) Anmeldetag : 01.10.80

(51) Int. Cl.⁴ : **G 01 C   1/06**

(54) Verfahren zur Bestimmung der Stehachsenfehler eines Vermessungsgerätes.

(30) Priorität : 01.10.79 DD 215908

(43) Veröffentlichungstag der Anmeldung : 15.04.81 Patentblatt 81/15

(45) Bekanntmachung des Hinweises auf die Patenterteilung : 13.03.85 Patentblatt 85/11

(84) Benannte Vertragsstaaten :
CH DE LI SE

(56) Entgegenhaltungen :
CH-A- 384 224
DE-A- 1 798 176
DE-A- 2 152 749
DE-A- 2 638 621
DE-C- 947 026
Die Akte enthält technische Angaben, die nach dem Eingang der Anmeldung eingereicht wurden und die nicht in dieser Patentschrift enthalten sind.

(73) Patentinhaber : Jenoptik Jena G.m.b.H.
Carl-Zeiss-Strasse 1
DDR-6900 Jena (DD)
DE
VEB Carl Zeiss Jena
Carl-Zeiss-Strasse 1
DDR-6900 Jena (DD)
CH LI SE

(72) Erfinder : Feist, Wieland, Dr.
Erfurter Strasse 6
DDR-6900 Jena (DD)

(74) Vertreter : Tschudi, Lorenz et al
Bovard AG Patentanwälte VSP Optingenstrasse 16
CH-3000 Bern 25 (CH)

## Beschreibung

Die Erfindung betrifft ein Verfahren zur Bestimmung der Stehachsenfehler eines mit einem Horizontalkreis und einem Vertikalkreis ausgestatteten Vermessungsgerätes, bei dem zur Anzeige der Horizontal- und Vertikalwinkel je ein im wesentlichen in der Ebene des zugehörigen Teilkreises liegender Index dient, bei dem der Index für den Vertikalkreis mit Hilfe eines Pendels stabilisiert wird und bei dem die Lage jedes Index in seinem zugehörigen Teilkreisintervall mikrometrisch gemessen wird. Der Stehachsenfehler wird entweder angezeigt und zur manuellen Korrektur der Stehachseneinstellung benutzt oder er wird zur Eliminierung seines Einflusses auf andere Messwerte automatisch in vorhandene Rechner eingegeben, in denen korrigierte Messwerte berechnet werden.

Aus der DE-A-2 638 621 ist ein Vermessungsgerät mit einer Vorrichtung zur Bestimmung von Stehachsen- oder Horizontierungsfehlern bekannt, indem mit einer Recheneinrichtung aus einem Messwert und dem Horizontierungsfehler der Korrigierte Messwert berechnet wird. Die Vorrichtung zur Bestimmung von Horizontierfehlern ist eine zusätzliche Baueinheit, für die im oder am Vermessungsgerät Raum- und Anbringungsmöglichkeiten vorgesehen sein müssen und die zusätzliche Justiermöglichkeiten benötigt. Das Vermessungsgerät wird damit aufwendiger und störanfälliger. Ferner ist die Bestimmung des Horizontierungsfehlers eines Vermessungsgerätes mit Hilfe eines Höhenindexpendels bekannt, das dieses Vermessungsgerät zur Stabilisierung der Höhenkreisanzeige besitzt, und zwar aus der Zeitschrift « Vermessungsinformationen », Heft 34, S. 19-20, herausgegeben von Jenoptik Jena GmbH, DDR, aus « The Australian Surveyor Sydney » 28 1976 4 p. S. 226-228 und aus der « Oesterreichisden Zeitschrift für Vermessungswesen » Wien 65 1977 2 p. S. 55. 57. Dabei wird das Fernrohr auf einen bestimmten Höhenwinkel eingestellt und die Horizontierung bei drei gegeneinander um etwa $100^{gon}$ versetzten Richtungen eingestellt bzw. geprüft. Weicht in der dritten Richtung die Anzeige am Höhenkreis von der Anzeige in der ersten Richtung ab, so liegt ein Horizontierungsfehler vor, der bei genauen Horizontalwinkelmessungen zu berücksichtigen ist. Der Nachteil dieser Methode ist eindeutig in der Beibehaltung des gleichen Höhenwinkels im Verlauf de Fehlerbestimmung zu sehen. Dieser Nachteil wirkt sich insbesondere dann aus, wenn von einem Standpunkt aus mehrere Richtungsmessungen vorzunehmen sind und wegen ausreichender Standfestigkeit des Vermessungsgerätes dessen Stehachsenneigung spürbaren Veränderunger unterworfen ist, so daß eine Kontrolle der Stehachsenneigung während der Richtungsmessungen erforderlich ist.

Durch die Erfindung soll ein Verfahren angegeben werden, das im wesentlichen mit herkömmlichen Geräten ohne zusätzlichen verfahrenstechnischen Aufwand realisiert werden kann.

Der Erfindung liegt die Aufgabe zugrunde, ein Verfahren zur Bestimmung und Berücksichtigung des Stehachsen- oder Horizontierungsfehlers zu entwickeln, das weder eines zusätzlichen Neigungsmessers, noch einer Unterbrechung des Prozesses des Richtungs- bzw. Horizontalwinkelmessung bedarf, um den Stehachsenfehler ermitteln und berücksichtigen zu können. Außerdem soll dieses Verfahren der Automatisierung des Bestimmungs- und Meßprozesses zugänglich sein.

Gemäß der Erfindung wird diese Aufgabe durch die kennzeichnenden Merkmale des Anspruches 1 gelöst. Der Index für die Horizontalwinkelmessung und der Index für die Vertikalwinkelmessung werden aufeinander bezogen und ihr Abstand voneinander mikrometrisch gemessen. Um beide Indices aufeinander beziehen zu können, müssen diese entweder in dieselbe Ebene abgebildet werden oder sie werden lichtelektrisch erfasst und die von ihnen erzeugten Impulse miteinander verglichen. Liegt kein Stehachsenfehler vor, so haben die Bilder bzw. Impulse einen bestimmten örtlichen oder zeitlichen Abstand voneinander, vorzugsweise fallen sie zusammen.

Ein Stehachsenfehler hat demnach eine Abweichung von dieser Sollage zur Folge. Das erfindungsgemässe Verfahren ist besonders geeignet für Winkelmessgeräte mit fotoelektrischer Erfassung der Teilkreisanzeige, Digitalrechner und ständig wirksamen optischem Mikrometer zur automatischen Interpolation der Lage der Indices in den Teilkreisintervallen des Horizontal- und Vertikalkreises. In diesem Fall wird die Ablage beider Indices voneinander mit Hilfe des optischen Mikrometers ständig neu ausgemessen. Ein in den Digitalrechner eingegebenes Programm wählt aus der Vielzahlvon auf einem Gerätestandpunkt gemessenen Richtungen die bei $0^{gon}$, $100^{gon}$ und $200^{gon}$ gemessenen Richtungen zur fortlaufenden Bestimmung des Stehachsenfehlers aus und veranlaßt die Erfassung de zugehörigen Interpolations- werte für die Lagedifferenz zwischen den Indices für den Horizontal- und Vertikalkreis. Dadurch ist es möglich, Veränderungen des Stehachsenfehlers laufend zu erfassen und ggf. den Korrekturwert am gemessenen Horizontalwinkel oder einer anderen Meßgröße anzubringen. Zur Realisierung des erfindungsgemäßen Verfahrens werden im wesentlichen nur die ohnehin im Winkelmeßgerät vorhandenen Bauteile verwendet. Beim visuellen Verfahren ist eine Zusammenführung der Bilder der Indices mit optischen Mitteln notwendig.

Die Erfindung wird an Hand der schematischen Zeichnung näher erläutert. Es zeigen :

Figur 1 die zur Ablesung der Teilkreisanzeigen erforderlichen Mittel in Vorderansicht,

Figur 2 die gleichen Ablesemittel in Seitenansicht,

Figur 3 die Draufsicht der gleichen Ablesemittel

Figur 4 das Ablesefenster für den Horizontalkreis,

Figur 5 das Ablesefenster für den Vertikalkreis und

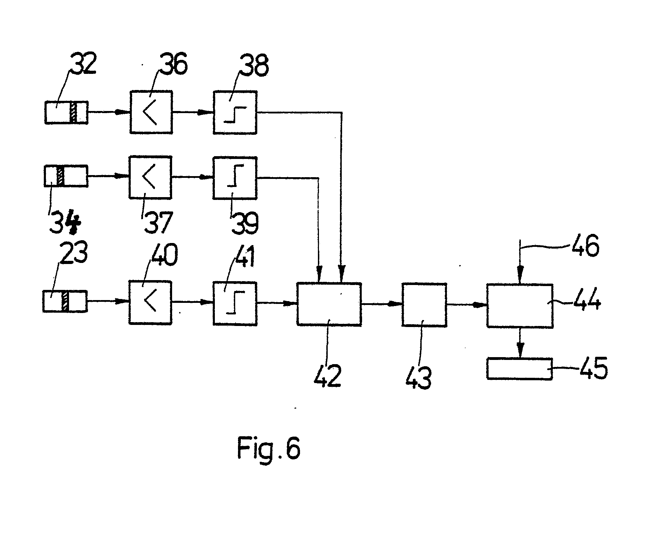

Figur 6 ein Blockschaltbild.

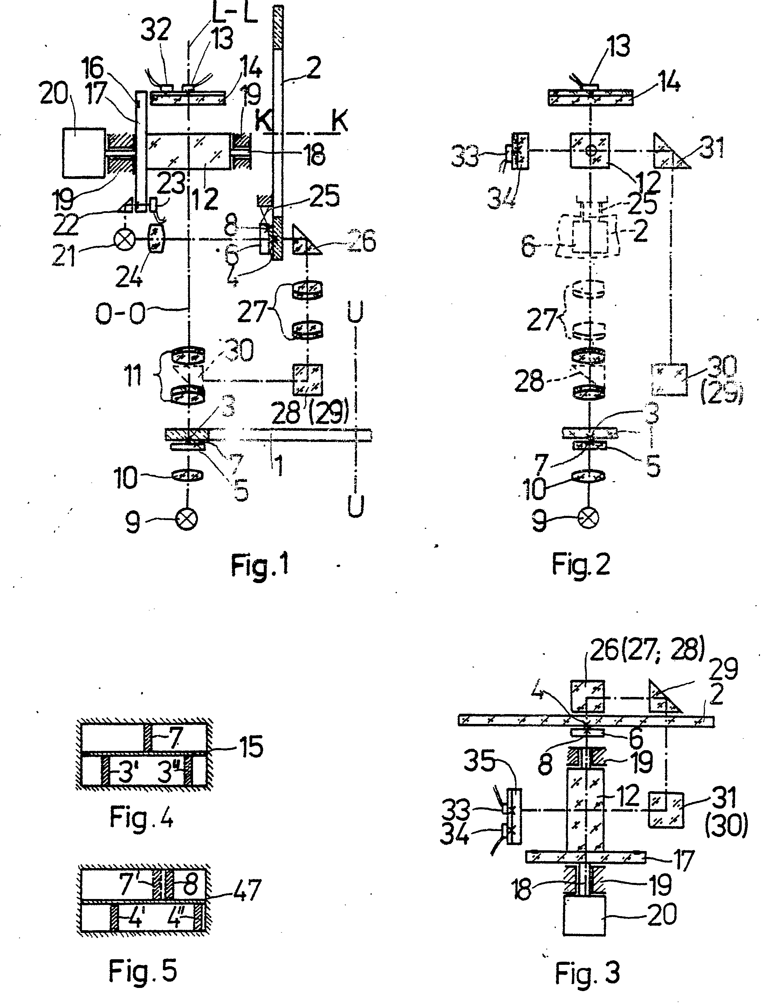

In den Fig. 1 bis 3 sind zwei Teilkreise 1 und 2 eines Winkelmeßinstrumentes dargestellt, die Kreisteilungen 3 und 4 tragen. Jedem Teilkreis 1, 2 ist ein Indexträger 5, 6 mit einem Index 7, 8 zugeordnet, der zur Teilkreisanzeige dient. Der Indexträger 6 ist mit Hilfe eines Kreuzfedergelenks 25 pendelnd aufgehängt. Die Kreisachsen sind K-K und U-U. Eine Lampe 9 und ein kondensor 10 dienen der Beleuchtung des Index 7 und des ihm benachbart leigenden Ausschnittes der Kreisteilung 3. Dieser beispeilsweise in Fig. 4 dargestellte Ausschnitt umfaßt den Index 7 und die beiden ihm benachbarten Striche 3′ und 3″ der Kreisteilung 3. Der Ausschnitt wird durch ein Objektiv 11 und eine optisch wirksame Planplatte 12 in die Ebene von Fotoempfängern 13, 32 abgebildet, die sich auf einem gemeinsamen durchsichtigen Trägen 14 befinden. Bei der Abbildung des Ausschnittes erscheint zwischen den benachbarten Strichen 3′, 3″ und dem Index 7 eine Trennkante 15. Die Planplatte 12 ist zusammen mit einer eine Teilung 16 tragenden Scheibe 17 auf einer Welle 18 befestigt, die in Lagern 19 drehbar ist und von einem Motor 20 angetrieben wird. Eine Lampe 21 dient über ein Prisma 22 der Beleuchtung der Stelle der Scheibe 17, hinter der sich ein Fotoempfänger 23 befindet, und über einen Kondensor 24 der Beleuchtung des Index 8 und des Abschnittes des Teilkreises 2, der in Fig. 5 durch die beiden dem Index 8 benachbart liegenden Striche 4′ und 4″ der Kreisteilung 4 gekennzeichnet ist. Der Index 8 wird mit den Teilungsstrichen 4′ und 4″ über ein Umlenkprisma 26, durch ein Objektiv 27, über Umlenkprismen 28, 29, 30, 31 und die Planplatte 12 in die Ebene von Fotoempfängern 33, 34 abgebildet, die sich auf einem lichtdurchlässigen Träger 35 befinden. Bei der Abbildung erscheint zwischen dem Index 8 und den Strichen 4′, 4″ eine Trennkante 47. Mit 7′ ist in Fig. 5 die Ablage des Index 7 vom Index 8 bezeichnet. Den Fotoempfängern 32 und 34 für die Indices 7, 8 sind je ein Verstärker 36, 37 und ein Trigger 38, 39 nachgeordnet. Ebenso sind dem Fotoempfänger 23 ein Verstärker 40 und ein Trigger 41 nachgeschaltet, der über ein Tor 42 und einen Zähler 43 mit einem rechner 44 verbunden ist, dem ein Anzeigemittel 45 zugeordnet ist. Die Trigger 38 und 39 stehen ebenso wie der Trigger 41 mit dem Tor 42 in Verbindung. Der Rechner 44 ist mit den Fotoempfängern 13 und 34 über ähnliche Funktionsketten, wie sie zu den Fotoempfängern 23, 32, 34 beschrieben sind, verbunden. Diese Verbindung ist angedeutet durch einen Pfeil 46.

Der Motor 20 treibt während der Messung die Planplatte 12 ständig zu Drehungen um eine zur optischen Asche 0-0 des Objektivs 11 rechtwinklige Achse an. Dadurch werden der Index 7 und die Striche 3′, 3″ der Kreisteilung 3 weiderholt über den Fotoempfänger 32 bzw. 13 und der Index 8 und die Striche 4′, 4″ der Kreisteilung 4 wiederholt über den Fotoempfänger 34 bzw. 33 geführt. Mit der Planplatte 12 dreht sich die Scheibe 16, dadurch dreht sich die Kreisteilung 16 vor dem Fotoempfänger 23 und erzeugt in diesem Interpolationsimpulse zur Ermittlung der Lage des Index 7 im intervall 3′-3″ bzw. des Index 8 im Intervall 4′-4″. Die im Fotoempfänger 23 erzeugten Impulse werden im Verstärker 40 verstärkt, im Trigger 41 in Rechteckform gebracht und dem Tor 42 zugeführt. In gleicher Weise verarbeiten der Verstärker 36 und der Trigger 38 die im Fotoempfänger 32 durch den Index 7 erzeugten Impulse und der Verstärker 37 und der Trigger 39 die im Fotoempfänger 33 durch den Index 8 erzeugten Impulse. Dabei kommt bei einer Umdrehung der Planplatte 12 in den Fotoempfängern 32 und 34 je ien Impuls und im Fotoempfänger 23 eine Anzahl von Impulsen zustande, die der Anzahl der Striche der Kreisteilung 16 gleich ist, wobei diese Anzahl die Feinheit der Unterteilung des Kreisteilungsintervalls 3′-3″ bwz. 4′-4″ bestimmt. Die durch Verstärker und Trigger verarbeiteten Impulse der Fotoempfänger 32 und 34 gelangen ebenfalls in das Tor 42, und zwar öffnet der aus dem Fotoempfänger 32 kommende Impuls das Tor 42 für die ständig anstehenden Impulse des Fotoempfängers 23, so daß diese zum Zähler gelangen können. Der aus dem Fotoempfänger 34 kommende Impuls schließt das Tor 42 für die Impulse des Fotoempfängers 23, er beendet die Zählung. Die gezählten Impulse gelangen in den Rechner 44, in dem aus ihnen nach einem vorgegebenen Programm ein Korrekturwert errechnet wird. In den Rechner 44 gelangen ferner die mit Hilfe der Fotoempfänger 13, 33 und 23 sowie der Planplatte 12 ermittelten Impulse für die Horizontal- und Vertikalwinkel, was durch den Pfeil 46 angedeutet ist. Der Rechner 44 bringt am Horizontalwinkel den Korrekturwert an und zeigt ihn ebenso wie den vertikalwinkel am Anzeigemittel an.

Der anzubringende Korrekturwert ist Null, wenn der sich unter der Wirkung der Schwerkraft in eine Gleichgewichtslage einstellende Indexträger 6 parallel zur Stehache L-L gerichtet ist, die in der dargestellten Lage mit der optischen Achse 0-0 zusammenfällt. Dann werden in den Fotoempfängern 32 und 34 die Impulse gleichzeitig erzeugt, weil die Indices 7 und 8 zeitlich koinzidieren. An den Eingängen zum Tor 42 leigen die Impulse aus den Fotoempfängern 32 und 34 gleichzeitig an. Ist das nicht der Fall, kommt es zu einer Korrekturwertbildung.

**Anspruch**

Verfahren zur Bestimmung der Stehachsenfehler eines mit einem Horizontalkreis und einem Vertikalkreis ausgestattetem Vermessungsgerätes, bei dem zur Anzeige der Horizontal- und Vertikalwinkel je ein im wesentlichen in der Ebene des zugehörigen Teilkreises liegender Index dient, bei dem der Index für den Vertikalkreis mit Hilfe eines Pendels stabilisiert wird und bei dem die Lage jedes Index in seinem zugehörigen Teilkreisintervall mikrometrisch gemessen wird, gekennzeichnet dadurch, daß zusätzlich zur Lagemessung jedes Index in seinem Teilkreisintervall der Index für den Horizontalkreis einen Zählvorgang auslöst, der durch den beweglichen Index für den Vertikalkreis gestoppt wird und daß die auf diese Weise gewonnenen Zählimpulse zur mikrometrischen Messung der Wanderung des Index für den vertikalkreis verwendet werden.

### Claim

Process for determining the vertical-axis errors of a surveying instrument equipped with a horizontal circle and a vertical circle, in which one index each, situated substantially in the plane of the associated divided circle, is used for indicating the horizontal and vertical angles, in which the index for the vertical circle is stabilized with the aid of a pendulum, and in which the position of each index in its associated divided-circle interval is measured micrometrically, characterized in that in addition to the position measurement of each index in its divided-circle interval, the index for the horizontal circle triggers a counting operation which is stopped by the movable index for the vertical circle, and that the counting pulses obtained in this way are used for the micrometric measurement of the displacement of the index for the vertical circle.

### Revendication

Procédé pour la mesure du défaut de verticalité d'un instrument géodésique qui est équipé d'un cercle de repérage horizontal et d'un cercle de repérage vertical, qui comporte des index situés chacun dans le plan du cercle partiel auquel ils correspondent et dans lequel l'index correspondant au plan vertical est stabilisé par un pendule et chaque index est mesuré dans l'intervalle du cercle partiel auquel il correspond par des moyens micrométriques, caractérisé en ce qu'outre la mesure, enclenchée par chaque index de sa position sur le cercle partiel correspondant, l'index du plan horizontal enclenche encore une opération de comptage qui est interrompue par l'index du plan vertical et en ce que les impulsions qui ont été ainsi obtenues sont utilisées pour la mesure micrométrique du déplacement de l'index du plan vertical.

Fig.1

Fig.2

Fig.4

Fig.5

Fig.3

Fig.6